# EUROPÄISCHE PATENTSCHRIFT

(11) **EP 0 459 237 B1**
(45) Veröffentlichungstag und Bekanntmachung des Hinweises auf die Patenterteilung: **26.07.1995**
(21) Anmeldenummer: 91107926.7
(22) Anmeldetag: 16.05.1991
(51) Int. Cl.: C08F 8/20, C08F 10/10

(54) **Verfahren zur Herstellung von Polymeren mit tertiären Chloridendgruppen**
Process for the production of polymers terminated by tertiary chloride groups
Procédé pour la préparation de polymères ayant comme groupes terminaux des clorures tertiaires

(30) Priorität: 30.05.1990 DE 4017300
(43) Veröffentlichungstag der Anmeldung: 04.12.1991
(73) Patentinhaber: BASF Aktiengesellschaft, 67063 Ludwigshafen (DE)
(72) Erfinder: Knoll, Konrad, Dr., W-6800 Mannheim 1 (DE); Bronstert, Klaus, Dr., W-6719 Carlsberg (DE); Bender, Dietmar, Dr., W-6707 Schifferstadt (DE)

(56) Entgegenhaltungen:
- DE-A- 2 148 547
- DE-A- 3 430 518

## Beschreibung

Es ist bekannt, daß man durch kationische Polymerisation von Isobuten oder olefinischen C₄-Schnitten, d.h. Polymerisation mittels Katalysatoren wie BF₃, Polymere oder Oliogomere mit endständiger Doppelbindung herstellen kann; vgl. DE-A-29 04 314. Die Endgruppen haben entweder die Struktur I: -CH₂-C(CH₃)₂-CH₂-C(=CH₂)-CH₃ (=I) oder II: -CH₂-C(CH₃)₂-CH=C(CH₃)₂ (=II). Nach einem nicht vorveröffentlichten Vorschlag kann man Kohlenwasserstoffe und Kohlenwasserstoffpolymere mit Endgruppen der Struktur III: -CH₂-C(CH₃)₂-CH₂-C(CH₃)₂-Cl durch Umsetzung mit Butadien in Gegenwart von BCl₃ und halogenierten Kohlenwasserstoffen in solche mit Endgruppen -CH₂-C(CH₃)₂-CH₂-C(CH₃)₂-CH₂-CH=CH-CH₂-Cl überführen, die für Substitutionsreaktionen unter Chlor-Austausch besonders geeignet sind.

Um geeignete Ausgangsmaterialien für diese Reaktion bereitzustellen, bestand daher die Aufgabe ein Verfahren anzugeben, das es ermöglicht, Endgruppen vom Typ I und II in solche vom Typ III umzuwandeln, die der weiteren Funktionalisierung mit Butadien zugänglich sind.

Es wurde gefunden, daß diese Aufgabe in jeder Weise befriedigend gelöst wird, wenn man die Kohlenwasserstoffe oder Kohlenwasserstoffpolymere mit jeweils einer Endgruppe I oder II in einem Lösungsmittel mittlerer Polarität mit überschüssigem Chlorwasserstoff oder einer stöchiometrischen Menge an wäßrigem Thionylchlorid umsetzt. Dabei lagert sich HCl an die Doppelbindungen der Reste I oder II an, wobei in beiden Fällen Verbindungen mit Resten der Struktur III entstehen.

Als Lösungsmittel mittlerer Polarität für die Umsetzung mit Chlorwasserstoff sind z.B. Methylenchlorid oder ein Gemisch aus Pentan und Diethylether gut geeignet. Voraussetzung für eine effiziente Reaktionsführung ist, daß sich einerseits der Kohlenwasserstoff oder das Kohlenwasserstoffpolymere vollständig in dem Lösungsmittel löst und dieses andererseits merkliche Mengen HCl aufnimmt. Als Lösungsmittel ungeeignet sind deshalb reine aliphatische Kohlenwasserstoffe, jedoch genügt schon ein Zusatz z.B. von 2 - 5 % eines Ethers, um ausreichend HCl zu binden. Im Falle der Rückführung von Lösungsmittel und überschüssiger HCl sind niedersiedende halogenierte Kohlenwasserstoffe wie Dichlormethan besonders geeignet. Die Umsetzung mit Thionylchlorid wird ebenfalls bevorzugt in Methylenchlorid durchgeführt.

Die Hydrochlorierung kann in einem weiten Temperaturbereich, vorzugsweise unter Raumtemperatur durchgeführt werden, wobei -78 bis +20°C bevorzugt sind. Gegen Ende der Umsetzung sollte das Reaktionsgemisch 0°C oder weniger vorzugsweise -20 bis -30°C aufweisen, um die HCl-Anlagerung zu vervollständigen.

Zur Charakterisierung der bei der Ausführung der nachstehenden Beispiele auftretenden Reaktionsprodukte wurden Chlorbestimmungen und 1H-NMR-Spektroskopie herangezogen. Die NMR-Messungen werden an einem 60 MHz-Gerät der Fa. Jeol durchgeführt.

### Bestimmungen der -CH₂-C(CH₃)₂-Cl-Endgruppen

Die 1H-NMR-Spektroskopie erlaubt es, zwischen den Protonen der Endgruppe und denen der Hauptkette zu unterscheiden (Polymer Bulletin 3, 339 (1908); Polymer Bulletin 21, 5 (1989). Aus dem Intensitätsverhältnis der Resonanzen terminaler Methyl- und Methylengruppen bei = 1,67 bzw. 1,96 ppm sowie nicht-terminaler Methyl- und Methylengruppen bei = 1,1 bzw. 1,4 ppm wurde die zahlengemittelte Molmasse M̅ₙ berechnet und mit der entsprechenden Molmasse M̅ₙ, bestimmt mittels Gelpermeationschromatographie verglichen.

### Beispiel 1

Hydrochlorierung von olefin-terminiertem Polyisobuten (PIB), hergestellt durch Polymerisation eines C₄-Schnittes mit 45 % Isobuten in Gegenwart von BF₃ nach dem Beispiel in der DE-A-2 904 314. Das Ausgangsmaterial wurde durch Gelpermeationschromatographie charakterisiert: Zahlenmittel M̅ₙ = 935 g/mol, Gewichtsmittel M̅_{w} = 1774 g/mol, M̅_{w}/M̅ₙ = 1,90.

Durch eine Mischung von 50 g PIB, 10 ml Diethylether und 50 ml n-Pentan wurden bei -5°C 3 Stunden lang Chlorwasserstoffgas geleitet, mit 100 g Eis versetzt und mit dem entstandenen Wasser ausgeschüttelt. Die organische Phase wurde mit eisgekühlter Natriumhydrogencarbonat-Lösung neutral gestellt, über Magnesiumsulfat getrocknet und im Vakuum eingeengt. Ausbeute 52,18 g; Cl-Gehalt 3,0 %. Das GPC des Produktes ist innerhalb der Fehlergrenze identisch mit dem Ausgangsprodukt.

### Beispiel 2

Analog Beispiel 1 wurden 50 g PIB in 50 ml Methylenchlorid 3 h bei -10°C mit Chlorwasserstoff umgesetzt und analog aufgearbeitet. Ausbeute 52,16 g; Cl-Gehalt 3,0 %.

### Beispiel 3

50 g PIB, 200 ml Methylenchlorid und 10 ml Thionylchlorid, das zuvor mit 5,3 ml Wasser versetzt worden war, wurden 3 h bei -10°C gerührt. Die Aufarbeitung erfolgt analog Beispiel 1. Ausbeute 52,10 g; Cl-Gehalt 2,9 %.

## Patentansprüche

1. Verfahren zur Herstellung von Polymeren des Isobutens mit tertiären Chloridendgruppen, dadurch gekennzeichnet, daß man entsprechende Polymere, die durch kationische Polymerisation von Isobuten hergestellt worden waren, in einem Lösungsmittel mittlerer Polarität mit überschüssigem Chlorwasserstoff oder einer stöchiometrischen Menge an wäßrigem Thionylchlorid umsetzt.

## Claims

1. A process for preparing polymers of isobutene with tertiary chloride end groups, which comprises corresponding polymers which had been prepared by cationic polymerization of isobutene being reacted in a solvent of medium polarity with excess hydrogen chloride or a stoichiometric amount of aqueous thionyl chloride.

## Revendications

1. Procédé pour la préparation de polymères de l'isobutène possédant des groupes terminaux de chlorures tertiaires, caractérisé en ce qu'on fait réagir des polymères correspondants, que l'on a préparés par polymérisation cationique d'isobutène, dans un solvant de polarité moyenne avec de l'acide chlorhydrique en excès ou avec une quantité stoechiométrique de chlorure de thionyle aqueux.
